# DEMANDE DE BREVET EUROPEEN

(11) **EP 1 577 245 A2**
(43) Date de publication de la demande: **21.09.2005**
(21) Numéro de dépôt: 05300116.0
(22) Date de dépôt: 14.02.2005
(51) Int. Cl.: B65H 51/10

(54) **Galet conique à gorge pour platine de dévidoir de fil de soudage**

(30) Priorité: 17.03.2004 FR 0450533
(71) Demandeur: LA SOUDURE AUTOGENE FRANCAISE, 75321 Paris Cedex 07 (FR)
(72) Inventeur: CHASSE, Didier, 60126, LONGUEIL SAINTE MARIE (FR)
(74) Mandataire: Pittis, Olivier

(57) **Abrégé**

L'invention porte sur un galet (1) de forme conique ou tronconique apte à entraîner un fil (10) de soudage de rayon R inférieur ou égal à 1 mm, comprenant une gorge (2) annulaire aménagée sur sa surface latérale conique (6), ladite gorge annulaire (2) ayant une forme telle que sa section droite par un plan diamétral par rapport audit galet (1) est formée d'au moins une première (3) et une deuxième (4) sections rectilignes formant l'une avec l'autre un angle (A) au moins égal à 90°, ces première et deuxième sections (3, 4) étant réunies par au moins une troisième section (5) en arc de cercle d'un rayon R'. Selon l'invention, le rayon R' de la troisième section (5) en arc de cercle est choisi en fonction du rayon R du fil (10) à entraîner tel que le rapport suivant soit vérifié : R' / R < 0.99, de préférence R' / R < 0.85. Platine de dévidage équipée d'un ou plusieurs galets selon l'invention ; dévidoir de fil équipé d'une telle platine ; et procédé de soudage à l'arc le mettant en oeuvre.

## Description

La présente invention concerne un galet de forme conique amélioré utilisable pour entraîner des fils de soudage de différents diamètres au moyen d'une platine de dévidage de fil équipée d'un ou plusieurs de ces galets.

Lorsqu'on réalise une soudure avec une torche alimentée en fil de soudage, encore appelé fil ou électrode fusible, on utilise habituellement un système d'alimentation en fil, encore appelé système de dévidage, comprenant une platine de dévidage de fil munie de moyens d'entraînement du fil (ou des fils) qui permettent d'entraîner le fil dans le sens allant de la réserve de fil, par exemple une bobine de fil de soudage, vers la torche de soudage où il est fondu grâce à l'énergie d'un arc électrique.

Les moyens d'entraînement du fil comprennent généralement des galets d'entraînement mobiles en rotation autour de leur axe, à savoir typiquement un galet moteur servant à entraîner le fil, c'est-à-dire à exercer un effort de traction sur le fil, transmis par un mouvement circulaire d'un moteur par l'intermédiaire d'engrenages ou directement sur l'axe de celui-ci, et un galet presseur dont la fonction est de venir appuyer sur le fil de manière à exercer sur celui-ci un effort tendant à le maintenir au contact du galet moteur, c'est-à-dire que les galets moteur et presseur se font face et coopèrent l'un avec l'autre pour amener le fil.

Les systèmes de dévidage connus utilisent des galets d'entraînement rotatifs soit de forme cylindrique, soit de forme conique.

Les platines à galets de forme cylindrique sont les plus répandues car, avec ce type de galets, il est possible de concevoir des systèmes simples permettant un dégagement et un démontage aisés des galets en vue de leur remplacement du fait de leur usure rapide engendrée par le passage du fil ou en vue du remplacement des autres pièces d'usure de la platine.

A ce titre, on peut citer par exemple les documents GB-A-2174942, FR-A-2161481, EP-A-17444 et US-A-4,068,106 qui décrivent des galets de forme cylindriques adaptés à l'entraînement de fils de soudage.

Toutefois, les platines à galets de forme cylindrique présentent aussi certains inconvénients, notamment celui de devoir utiliser des galets de diamètres différents ou ayant des gorges différentes de passage du fil pour dévider des fils de diamètres différents et celui de devoir introduire le fil d'apport en relâchant la pression qui s'exerce sur les galets, ce qui n'est pas pratique pour l'utilisateur.

De là, il a été proposé des platines de dévidage à galets de forme conique qui étaient supposées résoudre ces problèmes.

A ce titre, on peut citer le document US-A-4,534,499 qui a proposé une platine à deux galets de forme conique montés en opposition, dont l'un comporte une gorge périphérique annulaire aménagée sur sa surface conique, dans laquelle vient se loger le fil, lors de son entraînement par les galets.

De même, le document FR-A-2697188 propose aussi un dispositif d'entraînement de fil à au moins deux galets avec gorge coaxiale pour recevoir le fil sur le galet moteur. Selon ce document, pour améliorer le dévidage du fil et éviter les bourrages causés par l'application d'une force de pression excessive du galet presseur sur ledit galet moteur, il est nécessaire que la forme de la gorge du galet moteur soit choisie de sorte qu'elle comporte, considérée en section transversale, deux sections planes formant un angle d'au moins 90° entre elles réunies l'une à l'autre par une section en arc de cercle ayant un rayon voisin à celui du fil de soudage, c'est-à-dire approximativement égal à celui du fil entraîne par le galet à gorge.

Par ailleurs, le document EP-A-1338370 a proposé une platine de dévidage de fil de soudage également à galets rotatifs coniques sur lesquels s'exerce un effort de pression perpendiculaire à l'axe de rotation des galets de manière à améliorer encore le remplacement des pièces usées et le système de réglage de la pression exercée sur le fil par le galet presseur.

Toutefois, si ces dispositifs connus permettent de résoudre le problème de l'introduction du fil entre les galets, celui du bourrage du fil ou celui de la répartition de la pression exercée sur le fil, il a été constaté en pratique que le problème du remplacement fastidieux des galets de diamètres différents pour dévider des fils de diamètres différents n'a pas encore été résolu ou alors imparfaitement.

Or, il est très courant en soudage de devoir changer de type de fil selon l'application à réaliser, c'est-à-dire selon le type de soudure à opérer.

Cependant, les fils de soudage n'ont pas tous le même diamètre. Ainsi, les fils de soudage les plus répandus ont typiquement des diamètres inférieurs à 2 mm.

De là, le problème qui se pose est de proposer un galet de forme conique pour platine de dévidage amélioré par rapport aux galets connus et pouvant être utilisé avec des fils de diamètres différents, en particulier des diamètres de fil entre 0.6 et 2 mm, c'est-à-dire de rayon inférieur à 1 mm.

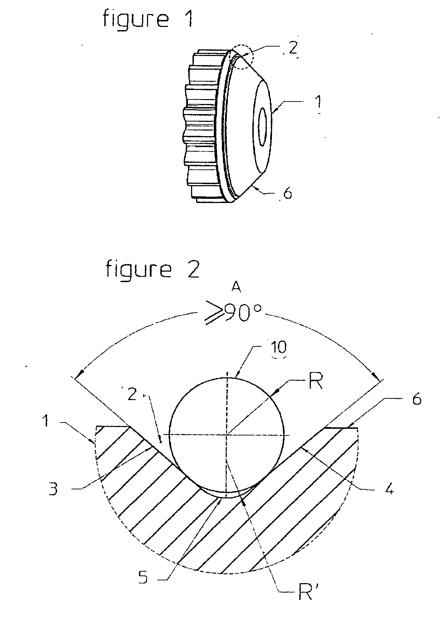

La solution de l'invention est alors un galet de forme conique ou tronconique apte à entraîner un fil de soudage de rayon R inférieur ou égal à 1 mm, comprenant une gorge annulaire aménagée sur sa surface latérale conique, ladite gorge annulaire ayant une forme telle que sa section droite par un plan diamétral par rapport audit galet (comme montré en figure 2) est formée d'au moins une première et une deuxième sections rectilignes formant l'une avec l'autre un angle (A) au moins égal à 90°, ces première et deuxième sections étant réunies par au moins une troisième section en arc de cercle d'un rayon R', caractérisé en ce que le rayon R' de la troisième section (5) en arc de cercle est choisi en fonction du rayon R du fil (10) à entraîner tel que le rapport suivant soit vérifié : R' / R < 0.99.

Selon le cas, le galet de l'invention peut comprendre l'une ou plusieurs des caractéristiques techniques suivantes :
- le rapport suivant est vérifié : R' / R < 0.95, de préférence R' / R < 0.90.
- le rapport suivant est vérifié : R' / R < 0.85 ; utiliser un tel rapport inférieur à 0.85 étant considéré comme un mode préféré de réalisation de l'invention.
- le rayon R' de la troisième section est choisi en fonction du rayon R du fil tel que : R' / R ≤ 0.80, pour un fil à entraîner de rayon R inférieur à 0.9 mm.
- le rayon R' de la troisième section est choisi en fonction du rayon R du fil tel que : R' / R ≤ 0.80, pour un fil à entraîner de rayon R compris entre 0.3 mm et 0.8 mm.
- la première et la deuxième sections rectilignes forment l'une avec l'autre un angle A compris entre 90 et 120°, de préférence un angle de 90° à 100°.

L'invention porte aussi sur une platine de dévidage de fil de soudage dont les moyens d'entraînement du fil comprenant des galets rotatifs de forme conique, caractérisée en ce qu'au moins l'un desdits galets comporte une gorge ayant la forme du galet de l'invention susmentionné.

Selon le cas, la platine de l'invention peut comprendre l'une ou plusieurs des caractéristiques techniques suivantes :
- la troisième section en arc de cercle forme le fond de la gorge.
- elle comporte 2 ou 4 galets coniques, chaque galet moteur étant associé à un galet presseur.

Selon un autre aspect, l'invention concerne aussi un dispositif de dévidage de fil de soudage comportant une platine selon l'invention, en particulier un dévidoir de fil de soudage.

Selon encore un autre aspect, l'invention concerne aussi un procédé de soudage à l'arc électrique avec fil d'apport fusible, dans lequel on met en oeuvre un dispositif de dévidage de fil selon l'invention et/ou une platine selon l'invention pour alimenter une torche de soudage à l'arc avec ledit fil d'apport fusible.

Selon le procédé, le fil d'apport fusible a préférentiellement un diamètre inférieur à 2 mm, de préférence entre environ 0.6 et 1.6 mm.

Dans le cadre de l'invention, on utilise indifféremment les termes "conique" ou "tronconique" pour désigner une forme de galet selon l'invention, c'est-à-dire non cylindrique.

L'invention va être mieux comprise grâce aux explications données ci-après en références aux figures illustratives annexées.

La Figure 1 annexée est une vue générale d'un galet 1 de forme conique, représenté en 3 dimensions en vue de 3/4, avec gorge 2 selon la présente invention, laquelle gorge 2 est conformée pour pouvoir entraîner des fils de soudage 10 de différents rayons R inférieurs ou égaux à 1 mm. Ici, le galet 1 comporte un engrenage d'entraînement.

Plus précisément, la Figure 2 est une vue grossie (en coupe transversale) de la zone de la surface conique du galet 1 de la Figure 1 au niveau de la gorge 2 annulaire dans laquelle passe le fil de soudage 10 (zone encerclée sur Fig. 1).

Comme on le voit sur la Figure 2, la gorge 2 annulaire a une forme telle que sa section droite par un plan diamétral par rapport audit galet 1 est formée d'au moins une première 3 et une deuxième 4 sections rectilignes formant l'une avec l'autre un angle A au moins égal à 90°.

Les première et deuxième sections 3,4 sont réunies par une troisième section 5 en arc de cercle d'un rayon d'arc R' formant le fond de la gorge 2.

Selon l'invention le rayon R' de la troisième section 5 en arc de cercle est choisi en fonction du rayon R du fil 10 à entraîner tel que le rapport R' / R < 0.85 soit vérifié, dans ce mode de réalisation, de manière à pouvoir utiliser plusieurs fils de diamètres (donc aussi de rayons) différents sans avoir besoin de remplacer le galet lors du passage d'un fil à l'autre.

Autrement dit, le galet 1 selon l'invention, grâce à la forme particulière de la gorge 2 et plus spécifiquement du fond de gorge constitué par la troisième section 5, peut être utilisé avec une large gamme de fil de soudage, à savoir des fils d'un diamètre allant typiquement de 0.6 à 1.6 mm, voire même au-delà.

Un tel galet 1 est, en pratique, le galet moteur d'une platine d'entraînement de fil incorporée à un dévidoir de fil. Une telle platine comporte habituellement au moins deux galets agencés en vis-à-vis l'un par rapport à l'autre de manière à venir exercer un contact mécanique sur la surface externe du fil de soudage lorsque le fil est inséré entre lesdits galets, à savoir un galet dit "moteur" et un galet dit "presseur".

Le galet moteur est mobile en rotation autour de son axe de manière à entraîner mécaniquement le fil de soudage selon un mouvement de translation.

Par ailleurs, le galet presseur est également mobile en rotation autour de son axe, lequel axe est généralement parallèle à l'axe du galet moteur, et a pour fonction d'aller exercer une pression mécanique sur la surface externe du fil, dans une direction tendant à le rapprocher du galet moteur, de manière à maintenir le fil au contact dudit galet moteur et ainsi permettre un entraînement efficace de cefui-ci ; le fil étant pris en 'sandwich' entre les deux galets.

Habituellement, des moyens de mise en mouvement de galet permettent de conférer un mouvement de rotation autour de son axe à au moins l'un des galets, de préférence le galet moteur. De tels moyens de mise en mouvement comprennent classiquement au moins un moteur électrique coopérant avec un ou plusieurs engrenages et/ou un ou plusieurs axes d'entraînement du galet moteur.

Le galet conique à gorge de forme particulière selon l'invention est particulièrement adapté à une incorporation dans une platine de dévidage de fil de soudage identique à celle décrite par le document EP-A-1338370 susmentionnée. Toutefois, il peut également être utilisé dans des platines du type de celle décrite par le document US-A-4,534,499 ou dans toute autre platine incorporable dans un dispositif d'entraînement de fil de soudage.

De même, des galets selon l'invention peuvent équiper aussi bien des platines à 2 galets (l'un moteur, l'autre presseur) que des platines à 4 galets (2 moteurs, 2 presseurs).

Habituellement, le galet 1 de l'invention est en un matériau du type acier traité ou analogue.

La gorge 2 est préférentiellement usinée au moyen d'un ou plusieurs outils adaptés, tels que des outils de décolletage.

En se reportant à la figure 2, on voit qu'avec un galet 1 selon l'invention, seules les faces ou parois latérales planes 3, 4 de la gorge 2, qui forment ensemble un angle d'au moins 90°, sont en contact avec la surface du fil 10 puisque celles-ci sont reliées l'une à l'autre par le fond 5 en arc de cercle de rayon nettement inférieur au rayon du fil. En d'autres termes, le fil 10 ne touche pas le fond 5 de la gorge 2.

Grâce à cette particularité, on peut entraîner efficacement des fils de diamètres différents et de rayons supérieurs à celui de l'arc du fond 5 de gorge sans avoir besoin de changer de galet 1 pour chaque fil 10, ce qui est obligatoire lorsqu'on suit l'enseignement de l'art antérieur, en particulier celui du document FR-A-2697188 qui recommande d'avoir des rayons de fil R et d'arc de gorge R' identiques ou très peu différents.

Afin de vérifier la faisabilité de l'invention, deux galets G1 et G2 différents ont été testés chacun avec des fils de soudage de plusieurs diamètres différents.

Un premier galet G1 a été usiné de manière à avoir un rayon d'arc R' d'environ 0.24 mm (+/- 0.01 mm) et un angle A de 90° environ. Ce galet G1 a permis un entraînement efficace de 3 fils de diamètres différents, à savoir de diamètres de 0.6 mm, 0.8 mm et 1 mm, ce qui équivaut à un rapport R'/R de 0.5 à 0.8 environ, selon le cas.

Un second galet G2 a été usiné de manière à avoir un rayon d'arc R' d'environ 0.35 mm (+/- 0.01 mm) et un angle A de 90° environ. Ce galet G2 a également permis un entraînement efficace de 3 fils de diamètres différents, à savoir de diamètres de 1 mm, 1.2 mm et 1.6 mm, ce qui équivaut à un rapport R'/R de 0.44 à 0.70 environ, selon le cas.

## Revendications

1. Galet (1) de forme conique ou tronconique apte à entraîner un fil (10) de soudage de rayon R inférieur ou égal à 1 mm, comprenant une gorge (2) annulaire aménagée sur sa surface latérale conique (6), ladite gorge annulaire (2) ayant une forme telle que sa section droite par un plan diamétral par rapport audit galet (1) est formée d'au moins une première (3) et une deuxième (4) sections rectilignes formant l'une avec l'autre un angle (A) au moins égal à 90°, ces première et deuxième sections (3, 4) étant réunies par au moins une troisième section (5) en arc de cercle d'un rayon R', **caractérisé en ce que** le rayon R' de la troisième section (5) en arc de cercle est choisi en fonction du rayon R du fil (10) à entraîner tel que le rapport suivant soit vérifié : R' / R < 0.99

2. Galet selon la revendication 1, **caractérisé en ce que** R' / R < 0.95, de préférence R' / R < 0.90.

3. Galet selon l'une des revendications 1 ou 2, **caractérisé en ce que** R' / R < 0.85.

4. Galet selon l'une des revendications 1 à 3, **caractérisé en ce que** le rayon R' de la troisième section est choisi en fonction du rayon R du fil tel que : R' / R ≤ 0.80, pour un fil à entraîner de rayon R inférieur à 0.9 mm, de préférence pour un fil à entraîner de rayon R compris entre 0.3 mm et 0.8 mm.

5. Galet selon l'une des revendications 1 à 4, **caractérisé en ce que** la première et la deuxième sections rectilignes forment l'une avec l'autre un angle A compris entre 90 et 120 °, de préférence un angle de 90° à 100°.

6. Platine de dévidage de fil de soudage dont les moyens d'entraînement du fil comprenant des galets rotatifs de forme conique, **caractérisée en ce qu'**au moins l'un desdits galets comporte une gorge ayant une forme selon l'une des revendications 1 à 5.

7. Platine selon la revendication 6, **caractérisée en ce que** la troisième section (5) en arc de cercle forme le fond de la gorge (2).

8. Platine selon l'une des revendications 6 ou 7, **caractérisée en ce qu'**elle comporte 2 ou 4 galets coniques, chaque galet moteur étant associé à un galet presseur.

9. Dispositif de dévidage de fil de soudage comportant une platine selon l'une des revendications 6 à 8, en particulier un dévidoir de fil de soudage.

10. Procédé de soudage à l'arc électrique avec fil d'apport fusible, dans lequel on met en oeuvre un dispositif selon la revendication 9 ou une platine selon l'une des revendications 6 à 8 pour alimenter une torche de soudage à l'arc avec ledit fil d'apport fusible, de préférence le fil d'apport fusible a un diamètre inférieur à 2 mm, de préférence encore entre environ 0.6 et 1.6 mm.
